# EUROPÄISCHE PATENTSCHRIFT

(11) **EP 1 917 118 B1**
(45) Veröffentlichungstag und Bekanntmachung des Hinweises auf die Patenterteilung: **24.02.2010**
(21) Anmeldenummer: 06775737.7
(22) Anmeldetag: 26.07.2006
(51) Int. Cl.: B23C 5/24

(54) **FRÄSMESSERKOPF**
MILLING CUTTER HEAD
TETE DE FRAISAGE

(30) Priorität: 23.08.2005 DE 202005013360 U; 13.03.2006 DE 202006004083 U
(43) Veröffentlichungstag der Anmeldung: 07.05.2008
(73) Patentinhaber: Kennametal Widia Produktions GmbH & Co. KG, 45145 Essen (DE)
(72) Erfinder: HEINLOTH, Markus, 92353 Postbauer-Heng (DE); KLÖTZER, Ralf, 98704 Langewiesen (DE); BAUER, Manfred, 90574 Rosstal (DE); GNIBL, Günther, 91586 Lichtenau (DE); KLEIN, Helmut, 91183 Abenberg (DE)
(74) Vertreter: Vomberg, Friedhelm
(86) Internationale Anmeldenummer: PCT/DE2006/001281
(87) Internationale Veröffentlichungsnummer: WO 2007/022743

(56) Entgegenhaltungen:
- DE-A1- 4 003 862
- DE-C- 519 691
- GB-A- 210 917

## Beschreibung

Die Erfindung betrifft einen Fräsmesserkopf mit mehreren, in Ausnehmungen eines Grundkörpers eingesetzten Schneidenträgern mit Schneiden, wobei die Schneidenträger jeweils über einen Keilkörper axial verstellbar und mittels Klemmelementen im Fräsmesserkopf fixierbar sind.

Ein solcher Fräsmesserkopf ist prinzipiell aus der DE 40 03 862 C2 bekannt. Die Ausnehmungen für die Schneidenträger erstrecken sich bei dem dort beschriebenen Messerkopf von der einen Stirnfläche seines Grundkörpers parallel zu dessen Drehachse sowie im Abstand vom Umfang, wobei die Schneiden der verwendeten Schneidplatten nur wenig über die Stirnfläche des Grundkörpers vorstehen. Ferner stehen die Achsen der zum Verspannen dienenden Rundkeile jeweils windschief zu den Achsen der die Schneidplatten tragenden Schneidplattenträger. Schließlich ist auch noch jeweils ein weiterer Rundkeil mit Differenzialschraube zur axialen Einstellung einer jeden Schneidplatte vorgesehen und in einer Ausnehmung angeordnet, die sich vom Umfang des Grundkörpers radial einwärts erstreckt. Zur axialen Einstellung und zum radial auswärts gerichteten Verspannen werden geometrisch gleiche Rundkeile verwendet. Als Vorteil dieses Messerkopfes wird hervorgehoben, dass aufgrund der Lage der die Schneidplattenträger aufnehmenden Ausnehmungen parallel zur Drehachse des Grundkörpers nur radial gerichtete Fliehkräfte ohne Axialkomponente auftreten. Diese Kräfte lassen sich gut abfangen, weil sich die Ausnehmungen nicht unmittelbar am Umfang des Grundkörpers, sondern radial einwärts im Abstand vom Umfang befinden. Der Messerkopf ist insbesondere für extrem hohe Drehzahlen und die dann auftretenden Fliehkräfte konzipiert. Vorteilhafter Weise ist eine Feineinstellung der Schneidelemente in axialer Richtung ohne Überlagerung mit Radialkomponenten möglich.

Ein anderer Fräsmesserkopf wird in der DE 519 691 offenbart, bei welchem mehrere übereinander angeordnete Messer mit wesentlich dem gleichen Neigungswinkel schräg zur Messerkopfachse in Einzelausnehmungen des Werkzeugkörpers gelagert sind. Zwei oder mehrere Messerreihen sind durch eine gemeinsame Stellvorrichtung verstellbar.

In der GB 210,917 wird ein Fräsmesserkopf beschrieben, der endseitig mehrere schräg zur Längsachse angeordnete Bohrungen aufweist, in die Schneidenträger einsteckbar sind. Diese sind entlang ihrer jeweiligen Bohrung längsaxial verschiebbar angeordnet, und lassen sich durch radial am Fräsmesserkopf angeordnete Klemmschrauben fixieren.

Bei der Bearbeitung von Kurbel- oder Nockenwellen wird zunächst eine Schrupp- bzw. Grobbearbeitung durch Dreh-Räumen, Fräsen oder Drehen vorgenommen. An diese Grobbearbeitung schließt sich eine Schlichtbearbeitung an, auf die eine Feinstschlichtbearbeitung folgt. Diese letzte Bearbeitung wird durch Schleifen oder Bandschleifen, verfahrensbedingt unter Einsatz von Kühlschmierstoffen, vorgenommen.

Alternativ hierzu wird in der DE 10 2004 022 360 A1 vorgeschlagen, zur Feinstschlichtbearbeitung das orthogonale Drehfräsen anzuwenden. In dieser Schrift wird auch erwogen, diese Bearbeitung des Werkstückes trocken bzw. mit einer Minimalmengenschmierung durchzuführen, was im Hinblick auf die hohen Entsorgungskosten für den Kühlschmierstoff wünschenswert ist.

Voraussetzung für eine Schlichtbearbeitung von Kurbel- oder Nockenwellenteilen mittels des orthogonalen Drehfräsens ist jedoch eine optimale Ausrichtung der im Fräsmesserkopf angeordneten Schneideinsätze. Jede Fehlstellung oder auch Schneidenfehler führen zu einer schlechteren Oberflächenqualität der hergestellten Werkstücke.

Es ist daher Aufgabe der vorliegenden Erfindung, einen einfach handhabbaren Fräsmesserkopf zu schaffen. Insbesondere soll dieser Fräsmesserkopf eine Bearbeitung von Kurbelwellen, insbesondere gehärteten Kurbelwellen für Pkw's ermöglichen und folgende Kriterien erfüllen:
1. Eine genaue axiale Positionierung der Schneideinsätze im vorhandenen Werkzeugträger,
2. eine genaue radiale Anordnung der Schneideinsätze in äquidistantem Winkelmaß, um Konturverzerrungen zu vermeiden,
3. einen genauen Planlauf aller Schneiden,
4. die Austauschbarkeit der Schneidenträger und
5. die Möglichkeit einer Mischbestückung des Fräsers mit unterschiedlichen Schneidelementen, sowohl hinsichtlich der Schneidstoffzusammensetzung als auch der Schneidengeometrie.

Diese Aufgabe wird durch einen Fräsmesserkopf nach Anspruch 1 gelöst. Dieser Fräsmesserkopf besitzt mehrere, in Ausnehmungen eines Grundkörpers eingesetzte Schneidenträger, auf die jeweils Schneiden aufgelötet sind. Die Schneidenträger sind jeweils über einen Keilkörper axial verstellbar und mittels eines einzigen Klemmelementes im Fräsmesserkopf fixierbar.

Erfindungsgemäß weisen die Schneidenträger jeweils einen Schaft auf, der in einer vorzugsweise koordinatengeschliffenen Aufnahmebohrung des Grundkörpers angeordnet oder von einem außen liegenden vorzugsweise auf den Grundkörper aufgeschrumpften Spannring umgeben und über ein einziges mittig liegendes Klemmstück fixierbar ist.

Mit der beschriebenen Lösung können die Schneidenträger über ihre Schaftmantelfläche exakt positioniert werden. Durch die gewählte längsaxiale Richtung der Schneidenträger bzw. der Schäfte können bei der Rotation des Fräsmesserkopfes auch keine Fliehkraftkomponenten entstehen, wie etwa bei solchen Konstruktionen, bei denen die Längsachse der Schneidenträger schräg zur Drehachse angeordnet ist. Durch die Aufnahme der Schäfte in jeweiligen Bohrungen des Grundkörpers sowie die Axialfixierung über ein Klemmstück, ergibt sich eine hohe Führungsgenauigkeit der Schneidenträger und damit der Schneidenausrichtung. Die Klemmung kann insgesamt bei geringer Bauhöhe platzsparend vorgenommen werden. Insbesondere ist das Klemmen und Lösen wiederholt genau reproduzierbar. Die Klemmung mittels eines Spannringes und eines axial mittig angeordneten Klemmstückes ermöglicht eine einfache Herstellbarkeit sowie eine hohe Führungsgenauigkeit der Schneidenträger und damit der Schneidenausrichtung. Die Klemmung besitzt zudem den Vorteil einer geringen platzsparenden Bauhöhe. Die Schneidenträger können wiederholungsgenau geklemmt werden.

Weitere Vorteile der Erfindung sind in den Unteransprüchen beschrieben.

So wird vorzugsweise das mittig angeordnete Klemmstück als ein in der Draufsicht n-eckiger Körper mit n-Planflächen ausgebildet, wobei jede Planfläche im Spannzustand an einer Planfläche eines Schneidenträgers bzw. des Schaftes eines Schneidenträgers anliegt. Die Anzahl n entspricht der Anzahl der verwendeten Schneidenträger, wobei vorzugsweise 3 Schneidenträger verwendet werden, die im 120°-Winkelabstand angeordnet sind. Das Klemmstück wird über eine Spannschraube, insbesondere eine Innensechskantschraube im Grundkörper befestigt. Durch diese Maßnahme eröffnet sich ein einfacher Aufbau des Fräsmesserkopfes, dessen Schneidenträger nach Verschleiß der Schneiden leicht gewechselt werden können. Zum Werkzeugwechsel ist es lediglich erforderlich, die Befestigungsschraube für das Klemmstück zu lösen, wonach alle Schneidenträger ohne Probleme herausnehmbar und durch Schneidenträger mit unverschlissenen Schneiden ersetzbar sind. Anschließend wird das Klemmstück axial mittig wieder eingesetzt, wobei die n-Planflächen eine entsprechende Drehwinkelausrichtung vorgeben. Das Klemmstück wird über die Klemmschraube, die vorzugsweise eine Doppelgewindeschraube ist, nunmehr im Grundkörper befestigt, wobei zwangsläufig eine Fixierung erreicht wird. Hierzu sind die Planflächen des Klemmstückes sowie die korrespondierenden Planflächen eines Schneidenträgers in Bezug auf die Fräsmesserkopfdrehachse leicht geneigt.

Zur Axialverstellung der Schneiden wird ein Keilkörper verwendet, der als Rundkeil mit einer ebenen Keilfläche ausgebildet ist. Dieser Rundkeil liegt in einer Radialbohrung des Grundkörpers und ist vorzugsweise über eine Justierschraube einstellbar. Die Schneiden auf dem Schneidenträger bestehen nach bevorzugten Ausgestaltungen der Erfindung aus Hartmetall, kubischem Bornitrid (CBN) oder einem polykristallinen Diamantkörper (PKD) und sind vorzugsweise auf dem Schneidenträger aufgelötet.

Weitere Ausbildungen des Fräsmesserkopfes werden im Folgenden anhand der Zeichnungen erläutert. Es zeigen:
- Fig. 1: eine perspektivische Ansicht eines Fräsmesserkopfes mit 3 Schneidenträgern, in einer ersten Ausführungsform,
- Fig. 2: eine drahtmodellartige Darstellung des Fräsmesserkopfes nach Fig. 1,
- Fig. 3: einen Längsquerschnitt durch den Fräsmesserkopf nach Fig. 1 und 2, ohne Schneidenträger,
- Fig. 4: eine Seitenansicht eines Schneidenträgers,
- Fig. 5: eine Prinzipsskizze der relativen Lage eines Schneidenträgers zu einem Klemmstück und einem Keilkörper zur axialen Einstellung,
- Fig. 6: eine perspektivische Ansicht eines Fräsmesserkopfes mit drei Schneidenträgern, in einer weiteren Ausführungsform,
- Fig. 7: eine Draufsicht auf den Fräsmesserkopf nach Fig. 6 und
- Fig. 8: eine drahtmodellartige Darstellung des Fräsmesserkopfes nach Fig. 6.

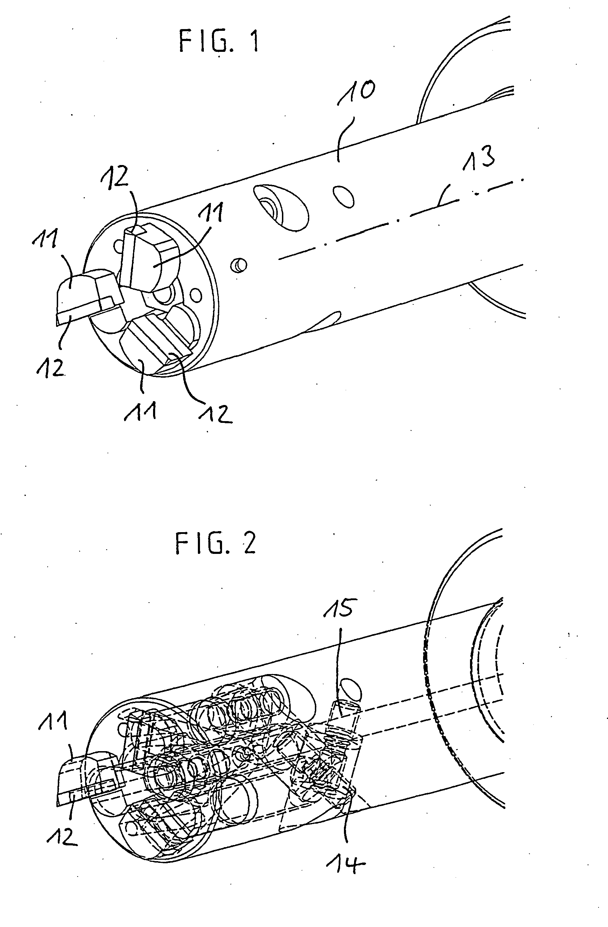

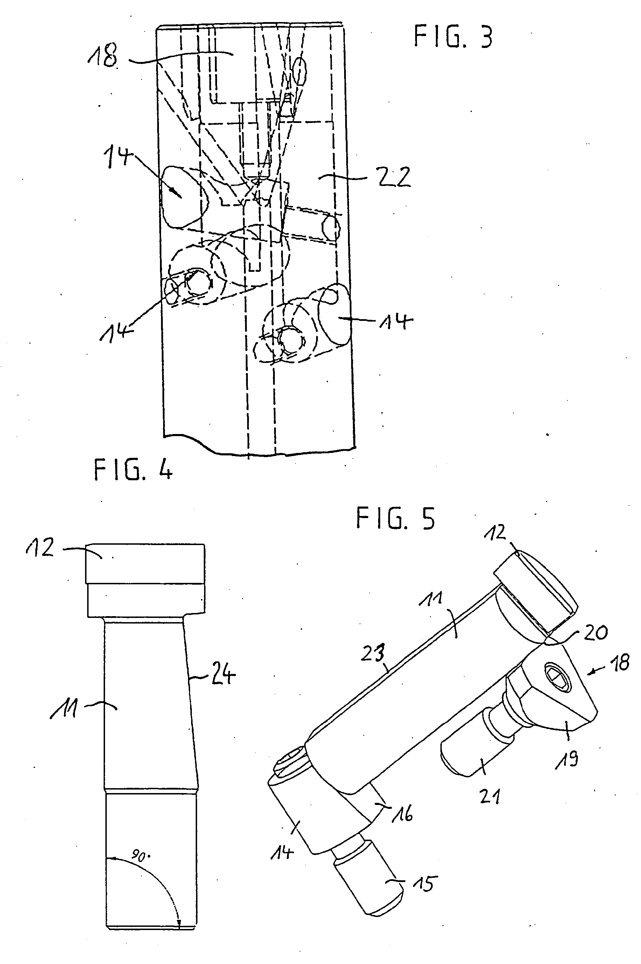

Der in Fig. 1 bis 3 dargestellte Fräsmesserkopf besteht im Wesentlichen aus einem Grundkörper 10, in dem drei Schneidenträger 11 mit jeweils aufgelöteten Schneiden 12 angeordnet sind. Die Schneidenträger 11 sind jeweils in parallel zur Längsachse 13 angeordneten Aufnahmebohrungen 22 (siehe Fig. 3) eingesetzt. Im Wesentlichen in radialer Richtung bzw. leicht hierzu geneigt sind weitere Bohrungen im Grundkörper 10 vorgesehen, in denen Keilkörper 14 angeordnet sind, die über eine Justierschraube 15, vorzugsweise eine Doppelgewindeschraube, in radialer Richtung verschiebbar sind. Wie aus Fig. 5 ersichtlich, besitzen diese Keilkörper 14 Keilflächen 16, die schräg zur Radialebene des Grundkörpers verlaufen, so dass bei einer Radialbewegung des Keilkörpers 14 der Schneidenträger 11 entlang seiner Längsachse, d. h. in axialer Richtung, verschiebbar ist. Zur Klemmung der Schneidenträger dient das Klemmstück 18, dass mittig angeordnet ist und drei Planflächen 19 aufweist, die an entsprechenden Planflächen 20 der Schneidenträger 11 anliegen. Das Klemmstück 18 kann mittels einer Schraube 21, die vorzugsweise als Doppelgewindeschraube ausgebildet ist, fixiert werden. Das Klemmstück 18 dient im dargestellten Fall zur Fixierung von drei Schneidenträgern 11, die jeweils eine ebene Planfläche 20 aufweisen. Durch die Ausbildung des Klemmstückes 18 und die Anordnung der Planflächen 19 in einer Triangelform wird ein exaktes Ausrichten der Schneiden und der Schneidenträger 11 unter einem Winkel von 120° zueinander (siehe Fig. 1) erreicht. Jeder Schneidenträger 11 kann über einen Rundkeil 14 und die dazu gehörige Schraube 15 axial verstellt werden. Zur achsparallelen Ausrichtung der Schneidenträger und damit der Schneideinsätze dienen die Bohrungen 22. Wie in Fig. 4 dargestellt, kann der Schneidenträger 11 auch eine geneigte Fläche 24 aufweisen, deren Neigung der Neigung einer Planfläche 19 des Klemmstückes entspricht. Damit wird sichergestellt, dass der Schneidenträger 11 gezielt auf die Planfläche 19 gepresst wird (aufgrund der Zerlegung der Klemmkraft in eine radial bzw. axial wirkende Komponente).

Die Vorteile der gewählten Ausführungsform bestehen insbesondere darin, dass eine exakte axiale Positionierung der Schneidenträger 11 und damit der Schneiden möglich ist und das gesamte Werkzeug eine kompakte, in sich geschlossene Bauweise aufweist, die für hohe Drehzahlen geeignet ist.

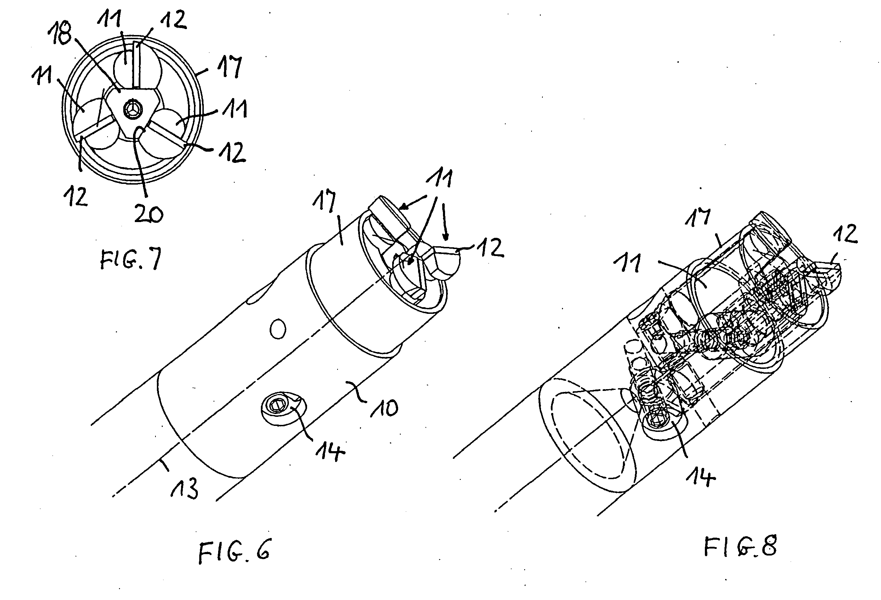

Der Fräsmesserkopf 10 nach Fig. 6 bis 8 besteht im Wesentlichen aus einem Grundkörper 10, in dem drei Schneidenträger 11 mit jeweils aufgelöteten Schneiden 12 angeordnet sind. Die Schneidenträger 11 sind jeweils in parallel zur Längsachse 13 angeordneten Bohrungen eingesetzt. Im Wesentlichen in radialer Richtung bzw. leicht hierzu geneigt, sind weitere Bohrungen im Grundkörper 10 vorgesehen, in denen Keilkörper 14 angeordnet sind, die über eine Justierschraube 15, vorzugsweise eine Doppelgewindeschraube, in radialer Richtung verschiebbar sind. Wie aus Fig. 5 ersichtlich, besitzen diese Keilkörper 14 Keilflächen 16, die schräg zur Radialebene des Grundkörpers verlaufen, so dass bei einer Radialbewegung des Keilkörpers 14 der Schneidenträger 11 entlang seiner Längsachse, d.h. in radialer Richtung, verschiebbar ist. Zur Klemmung der Schneidenträger 11 dienen ein Spannring 17 (siehe Fig. 6 und 7) sowie ein Klemmstück 18, das mittig angeordnet ist und drei Planflächen 19 aufweist, die an entsprechenden Planflächen 20 der Schneidenträger anliegen. Das Klemmstück 18 kann mittels einer Schraube 21, die vorzugsweise als Doppelgewindeschraube ausgebildet ist, fixiert werden. Das Klemmstück 18 dient im dargestellten Ausführungsbeispiel zur Fixierung von drei Schneidenträgern 11, die jeweils eine geschlossene Planfläche 20 aufweisen. Durch die Ausbildung des Klemmstückes und die Anordnung der Planflächen 19 in einer Triangelform wird ein exaktes Ausrichten der Schneiden, der Schneidenträger unter einem Winkel von 120° zueinander erreicht. Jeder Schneidenträger kann über den Rundkeil 14 und die dazugehörige Schraube 15 axial eingestellt werden. Zur achsparallelen Ausrichtung der Schneideinsätze bzw. der Schneideinsatzträger dient der Spannring 17, der hülsenförmige ausgebildet ist. Der Grundkörper 10 und der Spannring 17 besitzen im Spannzustand aneinander liegende Zylinderflächen. Wie Fig. 5 zeigt, besitzt der Schneidenträger 11 auch radial außen eine schmale geschliffene Fläche 23, die sich längsaxial erstreckt. Diese Fläche 23 sorgt für eine doppelte Linienberührung zwischen dem Spannring und dem Schneideinsatz.

Durch die Fixierung des Spannringes lassen sich hohe Drehzahlen des Fräsmesserkopfes bis zum 6000 Umdrehungen pro Minute ohne Qualitätseinbußen beim Zerspanen realisieren. Erst dann, wenn aufgrund extrem hoher Drehzahlen die auf den Spannring wirkenden Fliehkräfte maßgebliche Werte überschreiten, kann es zu einer Spannringaufweitung kommen.

Vorzugsweise ist der Spannring hülsenförmig ausgebildet und besitzt insbesondere eine Dicke von 0,5 mm bis 1 mm und/oder eine Höhe von 75 bis 100 mm. Diese Maße sind bei dem verwendeten Werkstoff (Stahl) ausreichend, um bishin zu extrem hohen Drehzahlen eine sichere Fixierung der Schneidenträger zu gewährleisten.

Der dargestellte Fräser ist für orthogonale Drehfräsarbeiten geeignet, insbesondere für die Endbearbeitung von Kurbelwellen anstelle des Schleifens. Das orthogonale Drehfräsen kann trocken durchgeführt werden, so dass im Gegensatz zum Nass-Schleifen unter Benutzung eines Kühlschmierstoffes weitere Kostenvorteile erzielbar sind. Der erfindungsgemäße Fräsmesserkopf erfüllt hohe Anforderungen an den Rundlauf, die Oberflächengüte des herzustellenden Werkstückes, die Konvexität des Lagersitzes und lässt eine wirtschaftliche Stückzahlfertigung zu. Insbesondere kann das Werkzeug zum orthogonalen Drehfräsen mit exzentrischer Werkzeuganstellung ohne, ggf. mit Axialvorschub benutzt werden.

### Bezugszeichenliste

- 10: Grundkörper
- 11: Schneidenträger
- 12: Schneiden
- 13: Längsachse
- 14: Keilkörper
- 15: Justierschrauben
- 16: Keilflächen des Keilkörpers 14
- 17: Spannring
- 18: Klemmstück
- 19: Planflächen
- 20: Planfläche
- 21: Schraube
- 22: Aufnahmebohrungen
- 23: ebene Fläche
- 24: geneigte Fläche

## Patentansprüche

1. Fräsmesserkopf mit mehreren, in Ausnehmungen eines Grundkörpers (10) eingesetzten Schneidenträgern (11) mit Schneiden (12), wobei die Schneidenträger (11) jeweils über einen Keilkörper (14) axial verstellbar und mittels Klemmelementen im Fräsmesserkopf fixierbar sind, wobei die Schneidenträger (11) jeweils einen Schaft aufweisen, der in einer Aufnahmebohrung (22) des Grundkörpers angeordnet ist
**dadurch gekennzeichnet, dass**
die Schneidenträger (11) über ein einziges mittig liegendes Klemmstück (18) fixierbar sind.

2. Fräsmesserkopf nach Anspruch 1, **dadurch gekennzeichnet, dass** die Aufnahmebohrungen (22) koordinatengeschliffen sind.

3. Fräsmesserkopf nach Anspruch 1, **dadurch gekennzeichnet, dass** der Spannring (17) auf den Grundkörper (10) aufgeschrumpft ist und/oder hülsenförmig ausgebildet ist und vorzugsweise eine Dicke von 0,5 mm bis 1 mm und/oder eine Höhe von 75 bis 100 mm aufweist.

4. Fräsmesserkopf nach einem der Ansprüche 1 bis 3, **dadurch gekennzeichnet, dass** das mittig angeordnete Klemmstück (18) ein in der Draufsicht n-eckiger Körper mit n-oberen Planflächen (19) ist, wobei jede Planfläche (19) im Spannzustand an einer Planfläche (20) eines Schneidenträgers (11) anliegt.

5. Fräsmesserkopf nach einem der Ansprüche 1 bis 4, **dadurch gekennzeichnet, dass** das Klemmstück (18) über eine Spannschraube (21), insbesondere eine Innensechskantschraube, im Grundkörper (10) befestigt ist.

6. Fräsmesserkopf nach einem der Ansprüche 1 bis 5, **dadurch gekennzeichnet, dass** der Keilkörper (14) ein Rundkeil mit einer ebenen Keilfläche (16) ist, der in einer Radialbohrung des Grundkörpers (10) angeordnet und vorzugsweise über eine Justierschraube (15) einstellbar ist.

7. Fräsmesserkopf nach einem der Ansprüche 1 bis 6, **gekennzeichnet durch** drei im 120°-Winkelabstand angeordnete Schneidenträger (11).

8. Fräsmesserkopf nach einem der Ansprüche 1 bis 7, **dadurch gekennzeichnet, dass** die Schneiden (12) aus einem Hartmetall-, CBN- oder PKD-Körper bestehen (CBN = Kubisches Bornitrid, PKD = Polykristalliner Diamant), der vorzugsweise auf den Schneidenträger aufgelötet ist.

## Claims

1. Milling cutter head with a plurality of blade holders (11) with blades (12) fitted in recesses of a base body (10), the blade holder (11) can be displaced axially via a wedge (14) and fixed in the milling cutter head by means of a clamping element, wherein the blade holders (11) each have a shank that is arranged in a receiving bore (22) of the base body, **characterised in that** the blade holder (11) can be fixed by means of a centrally located retaining element (18).

2. Milling cutter head according to claim 1, **characterised in that** the receiving bores (22) are cut on coordinates.

3. Milling cutter head according to claim 1, **characterised in that** the clamping ring (17) is shrink-fitted on the base body (10) and/or formed like a sleeve and preferably has a thickness of 0.5 mm to 1 mm and/or a height of 75 to 100 mm.

4. Milling cutter head according to one of claims 1 to 3, **characterised in that** the centrally located retaining element (18) is an n-corner body with n upper planar edge faces (19) in top view, each edge face (19) in the clamped position abutting a planar edge face (20) of a blade holder (11).

5. Milling cutter head according to one of claims 1 to 4, **characterised in that** the retaining element (18) is anchored in the base body (10) by a clamping screw (21), in particular, a hexagon-socket screw.

6. Milling cutter head according to one of claims 1 to 5, **characterised in that** the wedge (14) is a round pin with a flat wedge face (16) that can be set in a radial bore of the base body (10) and preferably adjusted by a screw (15).

7. Milling cutter head according to one of claims 1 to 6, **characterised in that** there are three blade holders (11) arranged at an angular offset of 120°.

8. Milling cutter head according to one of claims 1 to 7, **characterised in that** the blades (12) consist of a hard metal-, CBN- or PKD-body (CBN= cubic bornitride, PKD= polycrystalline diamond) that is preferably soldered to the blade holder.

## Revendications

1. Tête de fraisage à lames comprenant une pluralité de porte-lames (11) avec des lames (12), qui sont insérés dans des évidements d'un corps de base (10), lesdits porte-lames (11) étant respectivement axialement réglables par l'intermédiaire d'un corps en coin (14) et pouvant être fixés dans la tête de fraisage à lames au moyen d'éléments de serrage, lesdits porte-lames (11) présentant chacun une tige qui est disposée dans un trou de logement (22) du corps de base, **caractérisée par le fait que** les porte-lames (11) pouvant être fixés par une unique pièce de serrage (18) située au centre.

2. Tête de fraisage à lames selon la revendication 1, **caractérisée par le fait que** lesdits trous de logement (22) sont rectifiés en coordonnées.

3. Tête de fraisage à lames selon la revendication 1, **caractérisée par le fait que** la bague de serrage (17) est frettée sur ledit corps de base (10) et/ou est réalisée sous forme d'un manchon et présente de préférence une épaisseur comprise entre 0,5 mm et 1 mm et/ou une hauteur comprise entre 75 et 100 mm.

4. Tête de fraisage à lames selon l'une quelconque des revendications 1 à 3, **caractérisée par le fait que**, vue de dessus, ladite pièce de serrage (18) disposée au centre est un corps à n angles ayant n faces planes supérieures (19), chacune des faces planes (19) s'appliquant, en état serré, contre une face plane (20) d'un porte-lame (11).

5. Tête de fraisage à lames selon l'une quelconque des revendications 1 à 4, **caractérisée par le fait que** ladite pièce de serrage (18) est fixée par le biais d'une vis de serrage (21), en particulier une vis à tête six pans creux, dans ledit corps de base (10).

6. Tête de fraisage à lames selon l'une quelconque des revendications 1 à 5, **caractérisée par le fait que** ledit corps en coin (14) est une clavette ronde ayant une face plane de clavette (16), qui est disposée dans un perçage radial du corps de base (10) et réglable de préférence via une vis d'ajustage (15).

7. Tête de fraisage à lames selon l'une quelconque des revendications 1 à 6, **caractérisée par** trois porte-lames (11) disposés à un espacement angulaire de 120°.

8. Tête de fraisage à lames selon l'une quelconque des revendications 1 à 7, **caractérisée par le fait que** les lames (12) se composent d'un corps en métal dur, en NBC ou en DPC (NBC = nitrure de bore cubique, DPC = diamant polycristallin) qui, de préférence, est brasé sur le porte-lame.
